# EUROPÄISCHE PATENTSCHRIFT

(11) **EP 1 760 647 B1**
(45) Veröffentlichungstag und Bekanntmachung des Hinweises auf die Patenterteilung: **25.07.2012**
(21) Anmeldenummer: 06119778.6
(22) Anmeldetag: 30.08.2006
(51) Int. Cl.: G06Q 10/00

(54) **Verfahren und Anordnung zur Handhabung von Dateien mittels mobiler Endgeräte sowie ein entsprechendes Computerprogramm und ein entsprechendes computerlesbares Speichermedium**
Method and device for handling files using mobile devices, a corresponding computer program and a corresponding computer readable memory device
Procédé et dispositif de gestion de fichiers avec des dispositifs mobiles, un logiciel correspondant et une mémoire correspondante lisible par ordinateur

(30) Priorität: 30.08.2005 DE 102005042068; 26.09.2005 DE 102005046079
(43) Veröffentlichungstag der Anmeldung: 07.03.2007
(73) Patentinhaber: Cortado AG, 10559 Berlin (DE)
(72) Erfinder: Mickeleit, Carsten, 12205, Berlin (DE)
(74) Vertreter: Ziebig, Marlene

(56) Entgegenhaltungen:
- EP-A- 1 406 458
- WO-A-2004/112296
- WO-A-2005/013544
- US-A1- 2004 203 947

## Beschreibung

Die vorliegende Erfindung betrifft ein Verfahren und eine Anordnung zur Handhabung von Dateien mittels mobiler Endgeräte sowie ein entsprechendes Computerprogramm und ein entsprechendes computerlesbares Speichermedium, welche insbesondere einsetzbar sind zur Handhabung von E-Mail-Anhängen oder dergleichen auf mobilen Endgeräten wie beispielsweise Personal Digital Assistant (PDA), Smartphone oder Mobiltelefon.

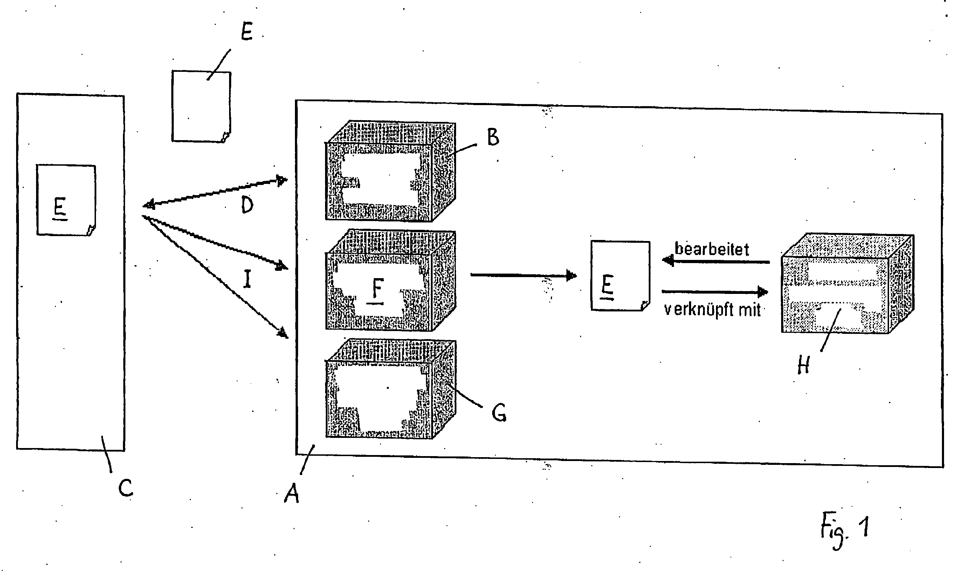

Heutzutage ist es üblich, auf mobilen Endgeräten E-Mails zusammen mit Anhängen zu empfangen. Stand der Technik sind dabei folgende Verfahren (die Buchstaben beziehen sich auf Figur 1) :

Von einem mobilen Endgerät A wird mit Hilfe eines Browsers B auf ein WAP- oder webbasiertes Mailsystem C zugegriffen D. Es sind auch solche Verfahren bekannt, bei denen E-Mail-Anhänge E dabei in HTML-Darstellung angezeigt werden (z. B. Nokia Business One Server). Vorteil dieses Verfahrens ist die Plattformunabhängigkeit; wesentlicher Nachteil ist, dass die Bedienung für den Benutzer nicht akzeptabel ist.

Ein anderes Verfahren (BlackBerry, Research In Motion Limited) nutzt spezielle auf dem mobilen Endgerät A installierte Software G bzw. spezielle mobile Endgeräte, die den Empfang von E-Mails ermöglichen; auch hier ist die Betrachtung von E-Mail-Anhängen E in Form von Text- oder HTML-Seiten bekannt. Nachteil dieses Verfahrens ist es, dass entweder spezielle Geräte zum Einsatz kommen müssen oder eine vom Standard-Mailagenten F verschiedene Software G für den Empfang von E-Mails und Anhängen E eingesetzt werden muss.

Letztlich werden Standard-Mailagenten F, die auf den Endgeräten A vorinstalliert werden, verwendet. In der Regel erlauben diese Agenten F, Anhänge E im Orginal herunterzuladen I. Nachteilig ist aber weiterhin, dass Anhänge immer vollständig übertragen werden müssen und dann lediglich mit dem auf dem mobilen Endgerät vorhandenen Anwendungen H betrachtet werden können.

Allen diesen Verfahren ist gemeinsam, dass aufwändige Handhabungen wie Drucken und Faxen der Anhänge E in der Regel nicht oder nur stark eingeschränkt möglich sind.

Aufgabe der Erfindung war es deshalb, ein Verfahren und eine Anordnung zur Handhabung von Dateien mittels mobiler Endgeräte sowie ein entsprechendes Computerprogramm und ein entsprechendes computerlesbares Speichermedium bereitzustellen, welche die oben beschriebenen Nachteile vermeiden und es insbesondere gestatten, Datei-Anhänge von E-Mails besonders zu behandeln.

Diese Aufgabe wird erfindungsgemäß durch die Merkmale in den Ansprüchen 1, 24, 25 und 26 gelöst. Zweckmäßige Ausgestaltungen der Erfindung sind in den Unteransprüchen enthalten.

Dabei ermöglicht die Erfindung insbesondere ohne Integration und Schnittstellenanforderungen, den Standard-Mailagenten des mobilen Endgerätes zu nutzen. Dadurch wird, was sehr wesentlich ist, zum einen die Benutzerakzeptanz durch höchstmögliche Integration in das Endgerät (Blinken bei neuer E-Mail, Kurztasten zur Mailbox etc.) sichergestellt ist und zum anderen gleichzeitig ermöglicht, dass die Standards und Weiterentwicklungen der jeweiligen Mailagenten (Exchange Push-Mail) jederzeit genutzt werden können. Zudem besteht durch diese Erfindung für den Anwender die Möglichkeit, weitere Ergänzungsprogramme zu nutzen, die den Standard-Mailagenten vorausgesetzt haben.

Ein besonderer Vorteil des erfindungsgemäßen Verfahrens zur Handhabung von Dateien mittels mobiler Endgeräte besteht darin, dass beispielsweise auch E-Mail-Anhänge unabhängig von ihrem Dateiformat auf einem mobilen Endgerät wie beispielsweise einem Personal Digital Assistant (PDA), einem Smartphone, einem Mobiltelefon oder vergleichbaren Endgeräten gehandhabt und dargestellt werden können. Durch den Einsatz der Erfindung entfällt auch die Notwendigkeit, für jedes Dateiformat die entsprechende Anwendung auf dem mobilen Endgerät zu installieren. Dies wird dadurch erreicht, indem bei dem Verfahren zur Handhabung von Dateien mittels mobiler Endgeräte eine Originaldatei als Anhang einer E-Mail oder als Anhang einer mittels eines Nachrichtenübermittlungsdienstes übertragenen Nachricht von einem zweiten Endgerät an einen Server eines Providers eines E-Mail- oder Nachrichtenübermittlungsdienstes übermittelt wird, die Originaldatei auf einer von dem mobilen ersten Endgerät verschiedenen ersten Datenverarbeitungseinrichtung gespeichert wird, eine mit der Originaldatei korrespondierende Datei erzeugt wird, wobei die korrespondierende Datei zumindest Angaben über den Speicherort der Originaldatei umfasst, die Originaldatei durch die korrespondierende Datei ersetzt und die korrespondierende Datei anstelle der Originaldatei als Anhang der E-Mail oder als Anhang der Nachricht an das mobile erste Endgerät übertragen wird, wobei weiter auf dem mobilen ersten Endgerät eine Anwendung installiert ist, und bei Nutzereingaben über Eingabemittel des mobilen ersten Endgeräts in die Anwendung durch die Anwendung die Nutzereingaben und wenigstens ein Teil der in der korrespondierenden Datei enthaltenen Daten ausgewertet werden, und die Anwendung Befehle zur Handhabung der Originaldatei an die erste oder eine zweite von dem mobilen ersten Endgerät verschiedene Datenverarbeitungseinrichtung sendet, die die erste oder zweite Datenverarbeitungseinrichtung veranlassen, eine Handhabung der Originaldatei gemäß den Nutzereingaben auszuführen, wobei die Handhabung erfolgt, indem ein Versenden der Originaldatei als Fax und/oder ein Ausdruck der Originaldatei gestartet wird.
Von besonderem Vorteil erweist es sich dabei, wenn die korrespondierende Datei eine geringere Dateigröße als die Originaldatei und/oder ein auf das mobile Endgerät optimiertes Format aufweist. Dadurch kann die Übertragungszeit der Dateien auf das mobile Endgerät bei der oftmals limitierten Übertragungsrate verkürzt bzw. die Darstellung und/oder Bearbeitung der korrespondierenden Datei vereinfacht werden. Vorzugsweise handelt es sich bei dem Format der korrespondierenden Datei um ein html-Format.

In einer bevorzugten Ausführungsform des erfindungsgemäßen Verfahrens erfolgt die Übermittlung der Dateien von der Datenverarbeitungseinrichtung zum mobilen Endgerät unter Nutzung eines elektronischen Nachrichtenübermittlungsdienst oder mit Hilfe einer TCP/IP-, HTTP-, HTTPS-, FTP-, SFTP-, Telnet- oder SSH-Verbindung oder anderer, in Daten- und/oder Kommunikationsnetzen für die Datenübertragung genutzter Protokolle. Bei dem Nachrichtenübermittlungsdienst kann es sich beispielsweise um
- einen Short Message Service (SMS),
- ein Enhanced Messaging System (EMS) oder
- einen Multimedia Messaging Service (MMS)
handeln.

Ein bevorzugter Anwendungsfall für den Einsatz des erfindungsgemäßen Verfahrens ist die Behandlung von angehängten Dateien, die von Kommunikationsdiensten wie z.B. E-Mail, SMS oder MMS (zusammen mit der eigentlichen Nachricht [body]) übertragen werden. Wenn es sich bei den Originaldateien um E-Mail-, SMS- oder MMS-Anhänge handelt, werden in diesem Falle die korrespondierende Datei anstelle der Originaldatei als Anhang zusammen mit der E-Mail, SMS oder MMS an das mobile Endgerät übertragen. Hierzu wird beispielsweise eine Originaldatei als E-Mail-, SMS-, EMS- oder MMS-Anhang von einem beliebigen Endgerät an den Server eines Providers eines E-Mail- oder Nachrichtenübermittlungsdienstes übermittelt, anschließend wird der Original-Anhang durch die korrespondierende Datei ersetzt und die korrespondierende Datei anstelle der Originaldatei als E-Mail-, SMS-, EMS- oder MMS-Anhang an das mobile Endgerät übertragen. Für die Erstellung der korrespondierenden Datei werden in einer bevorzugten Ausführungsform des erfindungsgemäßen Verfahrens die entsprechenden Originaldateien von dem Server des Providers eines E-Mail- oder Nachrichtenübermittlungsdienstes an die von dem mobilen Endgerät verschiedene erste Datenverarbeitungseinrichtung übertragen, wo dann die korrespondierenden Datei erzeugt wird. Die von dem mobilen Endgerät verschiedene erste Datenverarbeitungseinrichtung fungiert in diesem Falle gegenüber dem mobilen Endgerät als Server eines Providers eines E-Mail- oder Nachrichtenübermittlungsdienstes, indem auf der von dem mobilen Endgerät verschiedenen ersten Datenverarbeitungseinrichtung ein Computerprogramm installiert ist, welches den Server eines Providers des E-Mail- oder Nachrichtenübermittlungsdienstes nach dort vorhandenen E-Mails oder Nachrichten abfragt, dort vorhandenen E-Mails oder Nachrichten übernimmt, gegebenenfalls den E-Mails oder Nachrichten als Anhang beigefügte Originaldateien durch korrespondierende Dateien ersetzt und diese auf dem mobilen Endgerät zur Verfügung stellt. In einer bevorzugten Ausführungsform werden hierbei beispielsweise die E-Mail-Anhänge von einem Mail-Server über ein Datennetz, wie z.B. ein Local Area Network (LAN) und/oder das Internet, an eine andere Datenverarbeitungseinrichtung übertragen, auf der ein Computerprogramm installiert ist, welches dann die zu dem E-Mail-Anhang korrespondierende Datei erstellt. Es kann sich jedoch auch als vorteilhaft erweisen, wenn der Mail-Server und das Computerprogramm, welches die korrespondierende Datei erstellt, auf derselben Datenverarbeitungseinrichtung installiert sind.

Der Einsatz des erfindungsgemäßen Verfahrens zur Handhabung von Dateien mittels mobiler Endgeräte bietet sich aber auch an, wenn sich die auszugebende und/oder zu bearbeitende Datei bereits auf dem mobilen Endgerät befindet, sich aber nicht darstellen oder bearbeiten lässt, beispielsweise, weil das entsprechende Anwendungsprogramm nicht auf dem mobilen Endgerät installiert ist. In diesem Falle sieht die Erfindung vor, dass Originaldateien vom mobilen Endgerät an die von dem mobilen Endgerät verschiedene erste oder zweite Datenverarbeitungseinrichtung übertragen werden, dort die korrespondierende Datei erzeugt und anschließend die korrespondierende Datei an das mobile Endgerät zurück übertragen wird. Bei der Erzeugung der korrespondierenden Datei erfolgt eine Formatwandlung in ein auf dem mobilen Endgerät ausgebbares und/oder bearbeitbares Format. Von Vorteil ist es darüber hinaus, wenn die korrespondierende Datei Daten umfasst, die eine im wesentlichen mit dem Original übereinstimmende Wiedergabe des Inhalts der Originaldatei auf dem mobilen Endgerät ermöglichen.

In einer bevorzugten Ausführungsform der Erfindung ist vorgesehen, dass die Originaldatei mit Hilfe eines Digital Pens (Digitalisierungsstifts) erstellt und an das mobile Endgerät wird. Die Originaldatei kann dabei mittels Bluetooth, Infrarot, Wireless LAN drahtlos oder drahtgebunden übertragen werden.

Von besonderem Vorteil erweist es sich auch, wenn die Übertragung der Originaldatei an die vom mobilen Endgerät verschiedene erste oder zweite Datenverarbeitungseinrichtung von der auf dem mobilen Endgerät installierten Anwendung gesteuert wird.

Eine bevorzugte Ausführungsform des erfindungsgemäßen Verfahrens sieht vor, dass die korrespondierenden Dateien auf dem mobilen Endgerät bearbeitet werden können. Die korrespondierenden Dateien mit Daten, die eine im wesentlichen mit dem Original übereinstimmende Wiedergabe des Inhalts der Originaldatei auf dem mobilen Endgerät ermöglichen, werden in einem solchen Falle auf dem mobilen Endgerät modifiziert und anschließend an die von dem mobilen Endgerät verschiedene erste oder zweite Datenverarbeitungseinrichtung übertragen. Dort wird die Originaldatei entsprechend den auf dem Endgerät vorgenommenen Modifizierungen geändert. Zur Feststellung, ob eine Originaldatei oder eine korrespondierende Datei modifiziert wurde, ist es von Vorteil, wenn die Änderungen an der Originaldatei oder der korrespondierenden Datei über die Ermittlung bestimmter Werte festgestellt werden können. Vorzugsweise handelt es sich bei dem zu ermittelnden Wert um einen Hash-Wert, eine Seriennummer oder eine Zeitkennzeichnung.

Eine andere bevorzugte Ausführungsform des erfindungsgemäßen Verfahrens zur Handhabung von Dateien mittels mobiler Endgeräte sieht vor, dass der Start der auf dem mobilen Endgerät installierten Anwendung durch Aufruf der korrespondierenden Datei über eine Verknüpfung erfolgt. Vorteilhafterweise ist die Anwendung als Clientprogramm auf dem mobilen Endgerät installiert. Vorzugsweise wird wenigstens ein Teil des Clientprogramms in ein auf dem mobilen Endgerät vorhandenes Standard-Programm zur Mail-, Datei- oder Terminverwaltung integriert. In einer bevorzugten Ausführungsform bettet sich das Clientprogramm automatisch bei der Installation in die auf dem mobilen Endgerät vorhandenen Standard-Programme ein. Vorteilhaft ist dabei, wenn beispielsweise die Menüleiste des bzw. der Standard-Programme durch die entsprechenden "Handhabungs"-Buttons (Druck-, Download-, Weiterleitungs-, Übersetzungsbutton o.dgl.) ergänzt werden, und der Nutzer durch einfaches Anklicken der Button die Handhabungsfunktionen bereitgestellt bekommt. Dadurch wird beispielsweise ermöglicht, dass die korrespondierende Datei aus dem Nutzer vertrauten Standard-Programmen (wie beispielsweise aus Standard-Programmen zur Mail-, Datei- oder Terminverwaltung) heraus gestartet werden können, beispielsweise durch (doppelten) Mausklick. Es ist vorgesehen, dass die mit dem Datei-Typ der korrespondierenden Datei verknüpfte Anwendung eine Vielzahl von Handhabungen der korrespondierenden und/oder Originaldatei ermöglicht. Vorzugsweise umfasst die Handhabung
- die visuelle Ausgabe der Originaldatei auf dem mobilen Endgerät,
- die Aufbereitung eines Druckauftrags für den Ausdruck der Originaldatei, wobei die Aufbereitung auf einer von dem mobilen Endgerät verschiedenen Datenverarbeitungseinrichtung, beispielsweise dem Server eines Diensteanbieters, erfolgt,
- das Herunterladen der Originaldatei auf das mobile Endgerät,
- die Weiterleitung der Originaldatei als E-Mail, Fax, SMS, MMS, wobei die Weiterleitung von dem Server eines Diensteanbieters aus erfolgt,
- das Ablegen der Originaldatei auf einem Server,
- die Sprachübersetzung der Originaldatei,
- eine Texterkennung (z.B. bei Verwendung eines Digitalisierungsstifts) und Umwandlung in ein entsprechendes Textdokument,
- eine Auswertung des von einem Digitalisierungsstift erstellen Dokumentes mit einer anschließenden Zusammenstellung von Informationen und/oder
- eine Auswertung des von einem Digitalisierungsstift erstellen Dokumentes mit anschließendem automatischen Start von weiteren Prozessen.

Bei diesen zu startenden Prozessen kann es sich insbesondere um Workflows wie z.B. Kaufprozesse, Abnahmeprozesse oder dergleichen handeln.
Ein vorteilhafter Einsatz der Erfindung ergibt sich beispielsweise bei der Rückgabe eines Mietwagens. Bei der Abnahme notiert der Mitarbeiter der Mietwagenfirma den Tankinhalt, das KFZ Kennzeichen und eventuell einen Schaden. Mit den beschriebenen Handhabungen kann er nun:
- eine 1:1 Kopie der Notizen,
- ein in Maschinenschrift gedrucktes Abnahmeprotokoll,
- eine in Bezug darauf erstellte Rechnung drucken und/oder
- bei einem Schaden den Prozess (Workflow) der Schadensabwicklung anstoßen.
Dazu verwendet der Mitarbeiter lediglich den Digitalisierungsstift, schreibt handschriftlich die Notiz, sendet diese vom Digitalisierungsstift zum Handy und wählt die gewünschte Handhabung über das Handymenue.

Als vorteilhaft erweist es sich darüber hinaus, wenn die Bestimmung der Art der Handhabung vor oder zum Zeitpunkt der Übertragung der Originaldatei vom mobilen Endgerät auf die vom mobilen Endgerät verschiedene erste oder zweite Datenverarbeitungseinrichtung erfolgt.

In einer anderen bevorzugten Ausführungsform der Erfindung ist vorgesehen, dass ein Ergebnisprotokoll der Handhabung an das mobile Endgerät geliefert wird und/oder dass der Inhalt der korrespondierenden Datei und/oder des Ergebnisprotokolls direkt in ein auf dem mobilen Endgerät vorhandene Anwendung eingefügt wird, z.B. eine neue E-Mail, ein neuer Kalendereintrag etc. Das Ergebnisprotokoll kann dabei zusätzlich zu der korrespondierenden Datei oder anstelle der korrespondierenden Datei an das mobile Endgerät übertragen werden.

Die Druckausgabe kann dabei über das mobile Endgerät oder über die von dem mobilen Endgerät verschiedene Datenverarbeitungseinrichtung erfolgen.

Eine andere bevorzugte Ausführungsform des erfindungsgemäßen Verfahrens zur Handhabung von Dateien mittels mobiler Endgeräte sieht vor, dass die Handhabung folgendes umfasst: Der Inhalt der Originaldatei wird auf dem mobilen Endgerät in einer Datei abgespeichert, wobei der Typ der auf dem mobilen Endgerät abgespeicherten Datei dem Datei-Typ der Originaldatei entspricht oder dem Datei-Typ der Originaldatei vergleichbar ist.

Wieder eine andere bevorzugte Ausführungsform des erfindungsgemäßen Verfahrens zur Handhabung von Dateien mittels mobiler Endgeräte sieht vor, dass der Aufruf der korrespondierenden Datei
- aus einer Mail-Anwendung,
- aus einer Kalender-Anwendung oder
- aus einer Dateiverzeichnis-Anwendung
heraus erfolgt.

Die Übertragung von Dateien auf das mobile Endgerät erfolgt in einer bevorzugten Ausführungsform des erfindungsgemäßen Verfahrens per E-Mail, SMS, MMS oder als Download. Bei den Dateien kann es sich dabei sowohl um Originaldateien oder um korrespondierende Dateien handeln. Vorzugsweise erfolgt die Übertragung von Dateien auf das mobile Endgerät über eine drahtlose Verbindung zum Datenaustausch.

Eine Anordnung nach der Erfindung umfasst mindestens einen Chip und/oder Prozessor, der (die) derart eingerichtet ist (sind), dass ein Verfahren zur Handhabung von Dateien mittels mobiler Endgeräte ausführbar ist, wobei eine Originaldatei als Anhang einer E-Mail oder als Anhang einer mittels eines Nachrichtenübermittlungsdienstes übertragenen Nachricht von einem zweiten Endgerät an einen Server eines Providers eines E-Mail- oder Nachrichtenübermittlungsdienstes übermittelt wird, die Originaldatei auf einer von dem mobilen ersten Endgerät verschiedenen ersten Datenverarbeitungseinrichtung gespeichert wird, eine mit der Originaldatei korrespondierende Datei erzeugt wird, wobei die korrespondierende Datei zumindest Angaben über den Speicherort der Originaldatei umfasst, die Originaldatei durch die korrespondierende Datei ersetzt und die korrespondierende Datei anstelle der Originaldatei als Anhang der E-Mail oder als Anhang der Nachricht an das mobile erste Endgerät übertragen wird, wobei weiter auf dem mobilen ersten Endgerät eine Anwendung installiert ist, und bei Nutzereingaben über Eingabemittel des mobilen ersten Endgeräts in die Anwendung durch die Anwendung die Nutzereingaben und wenigstens ein Teil der in der korrespondierenden Datei enthaltenen Daten ausgewertet werden, und die Anwendung Befehle zur Handhabung der Originaldatei an die erste oder eine zweite von dem mobilen ersten Endgerät verschiedene Datenverarbeitungseinrichtung sendet, die die erste oder zweite Datenverarbeitungseinrichtung veranlassen, eine Handhabung der Originaldatei gemäß den Nutzereingaben auszuführen, wobei die Handhabung erfolgt, indem ein Versenden der Originaldatei als Fax und/oder ein Ausdruck der Originaldatei gestartet wird.

Für die Ausführung des erfindungsgemäßen Verfahrens wird ein Computerprogramm eingesetzt. Ein erfindungsgemäßes Computerprogramm zur Handhabung von Dateien mittels mobiler Endgeräte umfasst clientseitige und serverseitige Programm-Module und ermöglicht es einer Datenverarbeitungseinrichtung im Zusammenspiel mit einem mobilen Endgerät, nachdem das (die) clientseitige (n) Programm-Modul (e) in den Speicher des mobilen Endgerätes und das (die) serverseitige(n) Programm-Modul(e) in den Speicher der Datenverarbeitungseinrichtung geladen worden ist (sind), ein Verfahren zur Handhabung von Dateien mittels mobiler Endgeräte auszuführen, wobei eine Originaldatei als Anhang einer E-Mail oder als Anhang einer mittels eines Nachrichtenübermittlungsdienstes übertragenen Nachricht von einem zweiten Endgerät an einen Server eines Providers eines E-Mail- oder Nachrichtenübermittlungsdienstes übermittelt wird, die Originaldatei auf einer von dem mobilen ersten Endgerät verschiedenen ersten Datenverarbeitungseinrichtung gespeichert wird, eine mit der Originaldatei korrespondierende Datei erzeugt wird, wobei die korrespondierende Datei zumindest Angaben über den Speicherort der Originaldatei umfasst, die Originaldatei durch die korrespondierende Datei ersetzt und die korrespondierende Datei anstelle der Originaldatei als Anhang der E-Mail oder als Anhang der Nachricht an das mobile erste Endgerät übertragen wird, wobei weiter auf dem mobilen ersten Endgerät eine Anwendung installiert ist, und bei Nutzereingaben über Eingabemittel des mobilen ersten Endgeräts in die Anwendung durch die Anwendung die Nutzereingaben und wenigstens ein Teil der in der korrespondierenden Datei enthaltenen Daten ausgewertet werden, und die Anwendung Befehle zur Handhabung der Originaldatei an die erste oder eine zweite von dem mobilen ersten Endgerät verschiedene Datenverarbeitungseinrichtung sendet, die die erste oder zweite Datenverarbeitungseinrichtung veranlassen, eine Handhabung der Originaldatei gemäß den Nutzereingaben auszuführen, wobei die Handhabung erfolgt, indem ein Versenden der Originaldatei als Fax und/oder ein Ausdruck der Originaldatei gestartet wird.

Beispielsweise können diese Computerprogramme (gegen Gebühr oder unentgeltlich, frei zugänglich oder passwortgeschützt) downloadbar in einem Daten- oder Kommunikationsnetz bereitgestellt werden. Die so bereitgestellten Computerprogramme können dann durch ein Verfahren nutzbar gemacht werden, bei dem ein Computerprogramm nach Anspruch 15 aus einem elektronischen Datennetz, wie beispielsweise aus dem Internet, auf eine an das Datennetz angeschlossene Datenverarbeitungseinrichtung heruntergeladen wird.

Für den Vertrieb des erfindungsgemäßen Computerprogramms wird vorteilhafterweise ein computerlesbares Speichermedium eingesetzt, auf dem ein Computerprogramm gespeichert ist, wobei das Computerprogramm clientseitige und serverseitige Programm-Module umfasst, und das Computerprogramm es einer Datenverarbeitungseinrichtung im Zusammenspiel mit einem mobilen Endgerät ermöglicht, nachdem das (die) clientseitige(n) Programm-Modul(e) in den Speicher des mobilen Endgerätes und das (die) serverseitige(n) Programm-Modul(e) in den Speicher der Datenverarbeitungseinrichtung geladen worden ist (sind), ein Verfahren zur Handhabung von Dateien mittels mobiler Endgeräte auszuführen, wobei eine Originaldatei als Anhang einer E-Mail oder als Anhang einer mittels eines Nachrichtenübermittlungsdienstes übertragenen Nachricht von einem zweiten Endgerät an einen Server eines Providers eines E-Mail- oder Nachrichtenübermittlungsdienstes übermittelt wird, die Originaldatei auf einer von dem mobilen ersten Endgerät verschiedenen ersten Datenverarbeitungseinrichtung gespeichert wird, eine mit der Originaldatei korrespondierende Datei erzeugt wird, wobei die korrespondierende Datei zumindest Angaben über den Speicherort der Originaldatei umfasst, die Originaldatei durch die korrespondierende Datei ersetzt und die korrespondierende Datei anstelle der Originaldatei als Anhang der E-Mail oder als Anhang der Nachricht an das mobile erste Endgerät übertragen wird, wobei weiter auf dem mobilen ersten Endgerät eine Anwendung installiert ist, und bei Nutzereingaben über Eingabemittel des mobilen ersten Endgeräts in die Anwendung durch die Anwendung die Nutzereingaben und wenigstens ein Teil der in der korrespondierenden Datei enthaltenen Daten ausgewertet werden, und die Anwendung Befehle zur Handhabung der Originaldatei an die erste oder eine zweite von dem mobilen ersten Endgerät verschiedene Datenverarbeitungseinrichtung sendet, die die erste oder zweite Datenverarbeitungseinrichtung veranlassen, eine Handhabung der Originaldatei gemäß den Nutzereingaben auszuführen, wobei die Handhabung erfolgt, indem ein Versenden der Originaldatei als Fax und/oder ein Ausdruck der Originaldatei gestartet wird.

Das vorliegende erfindungsgemäße Verfahren ermöglicht eine an das mobile Computing angepasste Behandlung von Anhängen auch dann, wenn die Standard Mailagenten des mobilen Endgeräts verwendet werden.

Weitere Vorteile des erfindungsgemäßen Verfahrens bestehen darin, dass
- die Originaldateien nicht auf das mobile Endgerät übertragen werden, sondern auf dem Server des Dienste-Anbieters für die Ausgabe bzw. weitere Bearbeitung bereitliegen,
- die korrespondierende Datei in der Regel eine geringere Datenmenge (ca. 10 bis 15 KB) umfasst als die Originaldatei,
- außer dem zweiten, auf dem mobilen Endgerät installierten Programm-Modul und einem Standard-Programm zur Mailverwaltung (Standard-Mailagenten) sind keine weiteren Programme, wie beispielsweise ein Browser, notwendig, um E-Mail-Anhänge öffnen oder editieren zu können.

Die vorliegende Erfindung ermöglicht somit eine optimale Bedienung durch den Benutzer durch Verwendung der Standard-Mailagenten, ohne dabei Integrationsanforderungen an den Mailagenten zu stellen, das Betrachten von Anhängen auch ohne Herunterladen sowie gleichzeitig auch die Ausführung umfangreicher Handhabungen der Anhänge wie Drucken und Faxen etc. Ein besonderer Vorteil ist dabei, dass hierzu keine dateispezifischen Anwendungen auf dem mobilen Endgerät notwendig sind.

Nachstehend wird die Erfindung in einem Ausführungsbeispiel anhand der beigefügten Zeichnungen näher erläutert. Es zeigen:
- Fig. 1: schematische Darstellung einer herkömmlichen Handhabung einer Datei durch ein mobiles Endgerät,
- Fig. 2: beispielhafte Veranschaulichung der Handhabung einer Datei durch ein mobiles Endgerät nach der Erfindung.

Im Folgenden soll die Erfindung am Beispiel der Behandlung von E-Mail-Anhängen detailliert erläutert werden. Dabei ist zu berücksichtigen, dass die Erfindung nicht auf das im Folgenden beschriebene Ausführungsbeispiel eingeschränkt ist, sondern Verfahren und Anordnung ebenso gut auch für die Handhabung von Anhängen anderer Nachrichtendienste in Kommunikationsnetzen wie bspw. SMS- oder MMS-Anhängen eingesetzt werden können. Desgleichen ist auch eine Bearbeitung von Dateien auf die erfindungsgemäße Weise denkbar, indem über das mobile Endgerät 01 remote über Kommunikationsverbindungen eines Netzwerkes auf Dateien zugegriffen wird, und anstelle der Originaldatei 02 eine mit dieser korrespondierende Datei 04 auf das mobile Endgerät 01 heruntergeladen 13 und dort bearbeitet wird. Nach Zurücksenden der bearbeiteten korrespondierenden Datei 04 erfolgt automatisch ein Abgleich mit der Originaldatei 02 und ggf. eine Aktualisierung dieser Originaldatei 02.

Figur 1 gibt eine schematische Darstellung einer herkömmlichen Handhabung einer Originaldatei, beispielsweise eines E-Mail-Anhangs E, durch ein mobiles Endgerät A wieder. Wenn ein Nutzer nach den bisher bekannten Lösungen beispielsweise eine E-Mail mit einem Dateianhang, z.B. eine der E-Mail als Attachment beigefügte Excel-Datei, gesandt bekam, nahm der Nutzer durch Abfrage seiner auf dem Server C des E-Mail-Providers befindlichen Mailbox davon Kenntnis. Um die Excel-Datei, d.h. den originalen E-Mail-Anhang E, ausgeben oder bearbeiten zu können, musste der Nutzer bisher den E-Mail-Anhang E von dem Server C herunterladen. Bereits das Herunterladen großer Originaldateien stellt bei gewissen Kommunikationsverbindungen ein Problem dar. Eine weitere Schwierigkeit besteht oftmals darin, dass die mit dem Format des E-Mail-Anhangs E verknüpfte Anwendung H auf dem mobilen Endgerät A vorhanden sein muss, um diesen originalen E-Mail-Anhang E betrachten und/oder bearbeiten zu können. Aufgrund eingeschränkter Ressourcen ist das aber bei vielen mobilen Endgeräten A nicht der Fall.

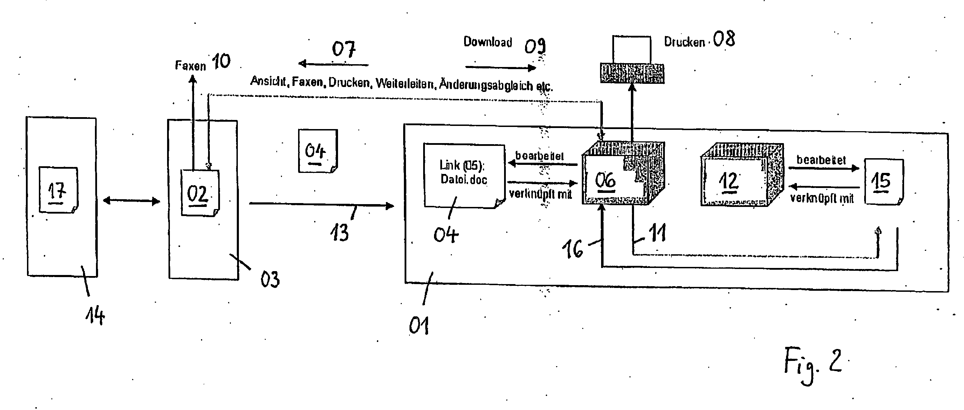

Demgegenüber lässt das Prinzip des erfindungsgemäßen Verfahrens sich folgendermaßen beschreiben (vgl. Figur 2): Zu Originaldateien 02, welche in herkömmlichen Formaten vorliegen, wie beispielsweise Office-, PDF- oder beliebige andere Dokumente, die Schrift oder Bilder drucken können (wie etwa Druckaufträge), wird eine korrespondierende Datei 04 erzeugt. Als Originaldateien 02 werden dabei insbesondere Dokumentendateien gehandhabt, wobei unter Dokumentendateien solche Dateien zu verstehen sind, welche von Anwendungen geöffnet, gespeichert und/oder geändert werden können, also Dateien, die Dokumente der jeweiligen Anwendug sind - im Gegensatz beispielsweise zu Systemdateien oder Anwendungsdateien (exe-Dateien). Die korrespondierenden Dateien 04 werden von einem Computerprogramm erzeugt, welches beispielsweise auf einem speziellen Server 03 eines Anbieters dieses Dienstes unterhalten wird. Die korrespondierenden Dateien 04 repräsentieren ein spezielles eigenes Datei-Format, welches auf dem mobilen Endgerät 01 mit Hilfe einer speziellen, auf dem mobilen Endgerät 01 installierten Anwendung 06 visualisiert und in einer bevorzugten Ausführungsform auch auf dem mobilen Endgerät 01 editiert werden kann. Das Editieren kann beispielsweise in Ändern oder Ergänzen eines Textes oder im Anhängen eines Bildes bestehen. Darüber hinaus kann dieses spezielle eigene Datei-Format von dem erwähnten Computerprogramm nicht nur erstellt, sondern auch gehandhabt bzw. weiterverarbeitet werden. Die Handhabung bzw. Weiterverarbeitung kann dabei insbesondere darin bestehen, dass eine auf dem mobilen Endgerät 01 überarbeitete korrespondierende Datei 04 durch ein auf dem Server 03 des Diensteanbieters installiertes Computerprogramm mit der Originaldatei 02 zusammengeführt wird, wobei die auf dem mobilen Endgerät 01 vorgenommenen Änderungen in die Originaldatei 02 übernommen werden.

Beispielsweise kann anstelle der eigentlichen Originaldatei 02, z. B. einer Microsoft Excel-Tabelle, eine korrespondierende Datei 04 erstellt werden, die lediglich den Link 05 zu der Excel-Datei beinhaltet. Diese korrespondierende Datei 04 kann nun als Anhang einer E-Mail auf das mobile Endgerät 01 heruntergeladen 13 werden. Auf dem mobilen Endgerät 01 wird diese dann mit der erwähnten speziellen Anwendung 06 aufgerufen, die auf Basis des im E-Mail-Anhang enthaltenen Links 05 die Handhabung der Originaldatei 02, wie beispielsweise das Drucken 08, das Versenden 10 von Faxen, den Download 09 der Originaldatei 02, die Anzeige des Inhaltes der Originaldatei 02 und vieles mehr erlaubt. Die Befehle zum Handhaben der Originaldatei 02, ggf. mit weiteren Daten wie beispielsweise einer überarbeiteten korrespondierenden Datei 04, werden dabei von der speziellen Anwendung 06 an den Server 03 des Diensteanbieters gesendet 07, auf welchem dann das Versenden 10 der Faxe, der Druckvorgang oder der Download 09 gestartet wird. Der Druckauftrag wird zwar in einer bevorzugten Ausführungsform auf dem Server 03 des Diensteanbieters gestartet, die Druckausgabe 08 der Originaldatei 02 kann jedoch sowohl über Server 03 des Diensteanbieters als auch über das mobile Endgerät 01 erfolgen.

In einer beispielhaften Ausführungsform der Erfindung gibt es zwei verschiedene Modi der korrespondierenden Datei 04:
- die korrespondierende Datei 04 enthält nur einen Link 05, über den der Nutzer die Originaldatei 02 entweder drucken 08 oder eine Vorschau abrufen kann. Eine beispielhafte Anwendung dieses Falles wäre, wenn der Nutzer in seiner Mailbox beim Abrufen alle Anhänge durch korrespondierende Dateien 04 ersetzt bekommt, die lediglich den Link 05 auf die entsprechende Originaldatei 02 enthalten. Beim Lesen der Mail auf dem mobilen Endgerät 01 wird die Vorschau oder der Ausdruck über Anklicken der korrespondierende Datei 04 erzeugt, indem über den in der korrespondierenden Datei 04 enthaltenen Link 05 auf die auf einem Server 03 des Anbieters liegende Originaldatei 02 zugegriffen und gleichzeitig auf dem Server 03 des Anbieters die entsprechende Anwendung (z.B. ein Druckauftrag) gestartet wird. Der Maildownload erfolgt dadurch schnell, die Originaldateien 02 der ursprünglichen Anhänge werden auf einem Server 03 des Anbieters in einem persönlichen Bereich des Nutzers abgelegt.
- die korrespondierende Datei 04 enthält Link 05 und Vorschaudaten: Dem Nutzer stehen hier alle Möglichkeiten zur Verfügung, die er bereits bei einer korrespondierenden Datei 04 nutzen kann, welche nur den Link 05 auf die Originaldatei 02 enthält. Zusätzlich aber kann er nun auf dem mobilen Gerät 01 die Vorschau auch ändern und die geänderte Version zum Server 03 des Anbieters schicken 07, auf dem dann die Änderungen in die Originaldatei 02 eingearbeitet werden.

Das spezielle Datei-Format der korrespondierenden Dateien 04 in Verbindung mit dem clientseitigen Programm-Modul, d.h. mit der auf dem mobilen Endgerät 01 installierten speziellen Anwendung 06, stellt insbesondere folgende Funktionen zur Verfügung (alternativ oder in Kombination):
- eine formatgetreue (persistente) Vorschau des Originaldokuments 02. Diese kann aus einer auf mobile Endgeräte 01 zugeschnittenen Zusammenfassung (also Text- und Bilder"vorschau") bestehen, die auf dem mobilen Endgerät 01 direkt angezeigt werden kann (da sich Originaldateien 02 im Allgemeinen nicht direkt anzeigen lassen und zudem oftmals sehr groß sind).
- einen Link 05 (z.B. eine Unified Ressource Location, URL) zu der Originaldatei 02,
- die Möglichkeit zum Aufruf verschiedenartiger Funktionen, wie beispielsweise Auslösen eines Druckauftrags 08, Weiterleiten der Originaldatei 02 als Mail, Fax 10, SMS, MMS,
- Erkennen von Veränderungen in den korrespondierenden Dateien 04 und Anpassung der Originaldatei 02 an die in der korrespondierende Datei 04 vorgenommenen Änderungen (sog. Revision Tracking).

In einer Ausführungsform enthält die korrespondierende Datei 04 HTML-Code, ggf. Bilder und/oder Style-sheets (mit Angaben zur Formatierung der korrespondierenden Datei 04 für die Ausgabe auf dem mobilen Endgerät 01), damit eine getreue oder im wesentlichen getreue Darstellung des Originaldokuments 02 auf dem mobilen Endgerät 01 ausgegeben wird. Darüber hinaus enthält jede korrespondierende Datei 04 den Namen des Servers 03 des Dienste-Anbieters. In einer Ausführungsform der Erfindung sind externe Link innerhalb des in der korrespondierende Datei 04 enthaltenen HTML-Codes nur erlaubt, wenn diese zum Server 03 des Dienste-Anbieters führen.

Auf dem mobilen Endgerät 01 ist, wie oben erwähnt, eine Client-Software installiert, d.h. eine spezielle Anwendung 06, welche mit dem speziellen Datei-Format der korrespondierenden Datei 04 verknüpft ist. Um die oben erwähnten verschiedenen Funktionen nutzen zu können, enthält die korrespondierende Datei 04 einen Link 05 oder eine Folge von Links 05 zum Server 03 des Anbieters dieser Dienste bzw. Funktionen. Damit sich der Nutzer des mobilen Endgerätes 01 auf diesem Server 03 einlogen kann, enthält die korrespondierende Datei 04 (vorzugsweise verschlüsselte) Zugangsdaten des Nutzers. Damit kann nun beispielsweise die POP3-Funktionalität genutzt werden. Diese läuft erfindungsgemäß beispielsweise folgendermaßen ab:
Die Anfrage an den Mailserver 14 des Nutzers erfolgt nun nicht direkt vom mobilen Endgerät 01 aus, sondern mittelbar, indem die mit dem Datei-Format der korrespondierenden Datei 04 verknüpfte spezielle Anwendung 06 (Client-Software) den entsprechenden Befehl zur Handhabung der Originaldatei 02, d.h. die Anfrage des Nutzers an den Server 03 des Dienste-Anbieters sendet 07. Von dem Server 03 des Dienste-Anbieters wird wiederum der Mailserver 14 abgefragt, die dort angekommenen E-Mails abgerufen und in einem auf dem Server 03 des Dienste-Anbieters eingerichteten besonderen Bereich des Nutzers abgelegt. Bei Abfrage des Mailkontos 17 erscheint der Server 03 des Diensteanbieters gegenüber dem Mailserver 14 als mobiles Endgerät (Nutzer); gegenüber dem mobilen Endgerät 01 erscheint der Server 03 des Diensteanbieters als Mailserver. Auf dem Server 03 des Dienste-Anbieters werden die Originaldateien 02 der ursprünglichen Anhänge der E-Mails gegen die korrespondierenden Dateien 04 ausgetauscht, welche einen Link 05 auf die Originaldateien 02 der ursprünglichen Anhänge enthalten. Anschließend werden die E-Mails, nunmehr mit den korrespondierenden Dateien 04 als Anhang, an das mobile Endgerät 01 übertragen. Bei Auswahl eines solchen Anhangs, beispielsweise durch Doppelklick, wird die auf dem mobilen Endgerät 01 installierte, mit dem Datei-Format der korrespondierenden Datei 04 verknüpfte spezielle Anwendung 06 (Client-Software) gestartet. Nach dem Start dieser speziellen Anwendung 06 steht dem Nutzer eine Vielzahl von Funktionen zur Verfügung. So kann er beispielsweise die korrespondierenden Datei 04 auf dem mobilen Endgerät 01 anzeigen lassen, auf dem Anbieter-Server 03 einen Auftrag zum Ausdruck 08 des Originaldokuments 02 starten oder auf dem Anbieter-Server 03 ein Programm starten, welches die Originaldatei 02 als Mail, Fax 10, SMS oder MMS weiterleitet oder auf einem Server ablegt. Dazu greift ein auf dem Anbieter-Server 03 installiertes Programm auf die auf dem Anbieter-Server 03 gespeicherten Originaldateien 02 zu und führt die entsprechenden Funktionen aus. Da der Anbieter-Server 03 über alle Angaben verfügt, um auf die Originaldateien 02 zugreifen zu können, entfällt die Notwendigkeit, die Originaldateien 02 auf das mobile Endgerät 01 herunterzuladen.

Vorzugsweise sind die korrespondierenden Dateien 04 auf dem mobilen Endgerät 01 editierbar. Um die Änderungen in der Originaldatei 02 nachvollziehen zu können, ist in der korrespondierenden Datei 04 der vollständige Pfad (Link 05) zur Originaldatei 02 enthalten, also der Pfad zum nutzerspezifischen Speicherort der Originaldatei 02 auf dem Anbieter-Server 03. Außerdem enthält die korrespondierende Datei 04 einen speziellen Wert über die Originaldatei 02, um verifizieren zu können, ob die Originaldatei 02 inzwischen geändert wurde. Bei diesem Wert kann es sich um einen Hash-Wert, eine Seriennummer oder eine Zeitkennzeichnung handeln.

In bestimmten Fällen ist es jedoch erforderlich, die Originaldatei 02 selbst auf dem mobilen Endgerät 01 zu bearbeiten. In diesem Falle wird die Originaldatei 02 vom Server 03 heruntergeladen 11. Nun steht sie zur Bearbeitung durch eine mit dem Format der Originaldatei 02 verknüpfte Anwendung 12 auf dem mobilen Endgerät 01 bereit und kann modifiziert werden. Anschließend kann die überarbeitete Originaldatei 02 wieder auf den Server 03 hochgeladen 16 werden, von wo aus sie wiederum mittels der dort installierten speziellen Anwendung gehandhabt werden, beispielsweise als Fax 10 weitergeleitet werden kann.

Durch das erfindungsgemäße Verfahren können jedoch nicht nur Originaldateien 02 verarbeitet werden, die sich außerhalb des mobilen Endgerätes 01 befinden, sondern auch Dateien 15, die lokal auf dem mobilen Endgerät 01 gespeichert sind. Dies ist beispielsweise nützlich, wenn auf dem mobilen Endgerät 01 keine mit den auf dem mobilen Endgerät 01 befindlichen Dateien 15 verknüpfte Anwendungen 12 vorhanden sind. In diesem Falle sieht die Erfindung vor, mit einem entsprechenden Handhabungsbefehl die Dateien 15 von dem mobilen Endgerät 01 auf den Server 03 des Dienste-Anbieters zu übertragen 07, wo dann die entsprechende korrespondierende Datei 04 erzeugt und an das mobile Endgerät 01 zurück übertragen 13 wird. Vorzugsweise ist die Vorschau der Originaldatei 02 als HTML-Code in der korrespondierenden Datei 04 enthalten.

In einer weiteren beispielhaften Ausführungsform ist vorgesehen, dass wenigstens ein Teil der mit den korrespondierenden Dateien 04 verknüpften speziellen Anwendungen 06 aus den Standard-Programmen heraus gestartet werden - durch Anklicken der korrespondierenden Datei 04. Das hat den Vorteil, dass die Nutzer für die Handhabung der Dateien weiterhin die ihnen bereits bekannten Standard-Programme, wie beispielsweise Standard-Programmen zur Verwaltung von Dateien (z.B. Explorer) oder zur Verwaltung von Terminen (z.B. Terminkalender), benutzen können.

Eine weitere beispielhafte Ausführungsform des erfindungsgemäßen Verfahrens sieht vor, Originaldateien 02 mit Hilfe eines "Digital Pen" (Digitalisierungsstift) zu erstellen und diese auf das mobile Endgerät 01 zu übertragen. Anschließend können diese Dateien an die vom mobilen Endgerät 01 verschiedene erste oder zweite Datenverarbeitungseinrichtung, z.B. einen Server 03, übertragen werden, beispielsweise um eine automatische Texterkennung vorzunehmen. Bei der Texterkennung wird beispielsweise das von dem Digitalisierungsstift aufgezeichnete Bild des geschriebenen Textes (oft eine Bitmap-Datei) durch ein Computerprogramm in eine editierbare Datei (bspw. Word- [*.doc] oder Text-Datei [*.txt]) umgewandelt.

Eine weitere bevorzugte Ausführungsform sieht vor, dass der Inhalt einer (auf dem mobilen Endgerät 01 befindlichen) Originaldatei 02 oder einer korrespondierenden Datei 04 direkt in eine auf dem mobilen Endgerät 01 vorhandene Anwendung eingefügt wird, z. B. als neue Email, als neuer Kalendereintrag etc., indem durch die spezielle Anwendung 06 die entsprechende Handhabung gestartet wird. Das kann beispielsweise der Befehl "neue Email schreiben" sein. In diesem Falle wird durch die spezielle Anwendung 06 über eine Schnittstelle des email-Clients automatisch eine neue Email entweder auf Basis des Inhaltes der Originaldatei 02 erstellt, oder die Originaldatei 02 wird vor Erstellung der Email erst durch die spezielle Anwendung 06 an den Server 03 übertragen, dort die korrespondierende Datei 04 (ggf. nach einer Bearbeitung der Originaldatei 02) erzeugt und diese korrespondierende Datei 04 an das mobile Endgerät 01 zurückübertragen, wo anschließend die neue Email auf Basis des Inhaltes der korrespondierenden Datei 04 generiert wird. Die zweite Vorgehensweise ist beispielsweise bei der Verwendung des Digitalisierungsstifts vorteilhaft, da im allgemeinen von dem Digitalisierungsstift eine bitmap-Datei erzeugt wird, welche oftmals nicht direkt weiterbenutzt werden kann. Auf dem Server wird dann beispielsweise eine Texterkennung durchgeführt und eine editierbare Datei erzeugt; aus dieser editierbaren Datei wird anschließend die korrespondierende Datei 04 erzeugt, welche an das mobile Endgerät 01 zurückübertragen wird, wo sie zur weiteren Verwendung bereitsteht, und z.B. in eine neu zu erzeugende Email eingefügt wird. Auf die gleiche Weise können neue Kalendereinträge automatisch erstellt werden. Das geschieht dadurch, das der Inhalt der Anwendung über eine vorhandenen geeignete Schnittstelle übermittelt wird. Neben Emails und Kalendereinträgen können dies auch Aufgabenlisten, Notizen, Adresseinträge sein. Für den Anwender sieht das Verfahren dann so aus, als wenn er direkt mit dem Digitalisierungsstift den Email Text schreiben könnte.

Eine weitere bevorzugte Ausführungsform sieht vor, dass die Bestimmung, welche Handhabung der Originaldatei 02 erfolgen soll, schon vor oder zum Zeitpunkt des Hochladens der Datei vom mobilen Endgerät 01 auf die vom mobilen Endgerät 01 verschiedene erste oder zweite Datenverarbeitungseinrichtung (Server 03) erfolgt.

Die Erfindung beschränkt sich in ihrer Ausführungsform nicht auf das vorstehend angegebene bevorzugte Ausführungsbeispiel. Vielmehr ist eine Anzahl von Varianten denkbar, die von der erfindungsgemäßen Vorrichtung und dem erfindungsgemäßen Verfahren auch bei grundsätzlich anders gearteten Ausführungen Gebrauch macht.

### Bezugszeichenliste

- A: mobiles Endgerät
- B: Browser
- C: Server
- D: Zugriff auf den Server
- E: E-Mail-Anhang
- F: Mailagent
- G: spezielle Software
- H: andere Anwendung

- 01: mobiles Endgerät
- 02: Originaldatei
- 03: Server
- 04: korrespondierende Datei
- 05: Link
- 06: spezielle Anwendung
- 07: Senden der Befehle zum Handhaben der Originaldatei an den Server des Diensteanbieters
- 08: Drucken
- 09: Download der Originaldatei
- 10: Versenden von Faxen
- 11: Weiterleitung der Originaldatei von der speziellen zu einer anderen Anwendung unmittelbar nach ihrem Download
- 12: andere Anwendung
- 13: Herunterladen der korrespondierenden Datei
- 14: Mailserver
- 15: auf dem mobilen Endgerät befindliche Dateien
- 16: Upload der Originaldatei
- 17: Mailkonto

## Patentansprüche

1. Verfahren zur Handhabung von Dateien mittels eines mobilen ersten Endgeräts, wobei
eine Originaldatei (02) als Anhang einer E-Mail oder als Anhang einer mittels eines Nachrichtenübermittlungsdienstes übertragenen Nachricht von einem zweiten Endgerät an einen Server eines Providers eines E-Mail- oder Nachrichtenübermittlungsdienstes übermittelt wird,
die Originaldatei (02) auf einer von dem mobilen ersten Endgerät (01) verschiedenen ersten Datenverarbeitungseinrichtung gespeichert wird, eine mit der Originaldatei (02) korrespondierende Datei (04) erzeugt wird, wobei die korrespondierende Datei (04) zumindest Angaben über den Speicherort der Originaldatei (02) umfasst,
die Originaldatei (02) durch die korrespondierende Datei (04) ersetzt und die korrespondierende Datei (04) anstelle der Originaldatei (02) als Anhang der E-Mail oder als Anhang der Nachricht an das mobile erste Endgerät (01) übertragen wird,
wobei weiter auf dem mobilen ersten Endgerät (01) eine Anwendung installiert ist, und bei Nutzereingaben über Eingabemittel des mobilen ersten Endgeräts (01) in die Anwendung durch die Anwendung die Nutzereingaben und wenigstens ein Teil der in der korrespondierenden Datei (04) enthaltenen Daten ausgewertet werden, und
die Anwendung Befehle zur Handhabung der Originaldatei (02) an die erste oder eine zweite von dem mobilen ersten Endgerät (01) verschiedene Datenverarbeitungseinrichtung sendet, die die erste oder zweite Datenverarbeitungseinrichtung veranlassen, eine Handhabung der Originaldatei (02) gemäß den Nutzereingaben auszuführen,
wobei die Handhabung erfolgt, indem ein Versenden der Originaldatei (02) als Fax und/oder ein Ausdruck der Originaldatei (02) gestartet wird.

2. Verfahren nach Anspruch 1,
**dadurch gekennzeichnet, dass**
es sich bei dem Nachrichtenübermittlungsdienst um
- einen Short Message Service (SMS),
- ein Enhanced Messaging System (EMS) oder - einen Multimedia Messaging Service (MMS)
handelt.

3. Verfahren nach Anspruch 1 oder 2,
**dadurch gekennzeichnet, dass**
Originaldateien (02) von dem Server eines Providers eines E-Mail- oder Nachrichtenübermittlungsdienstes an die von dem mobilen ersten Endgerät (01) verschiedene erste Datenverarbeitungseinrichtung übertragen werden.

4. Verfahren nach einem der voranstehenden Ansprüche,
**dadurch gekennzeichnet, dass**
die von dem mobilen ersten Endgerät (01) verschiedene erste Datenverarbeitungseinrichtung gegenüber dem mobilen ersten Endgerät (01) als Server eines Providers eines E-Mail- oder Nachrichtenübermittlungsdienstes fungiert, indem auf der von dem mobilen ersten Endgerät (01) verschiedenen ersten Datenverarbeitungseinrichtung ein Computerprogramm installiert ist, welches den Server eines Providers des E-Mail- oder Nachrichtenübermittlungsdienstes nach dort vorhandenen E-Mails oder Nachrichten abfragt, dort vorhandenen E-Mails oder Nachrichten übernimmt, gegebenenfalls die den E-Mails oder Nachrichten als Anhang beigefügten Originaldateien (02) durch korrespondierende Dateien (04) ersetzt und diese auf dem mobilen ersten Endgerät (01) zur Verfügung stellt.

5. Verfahren nach einem der vorstehenden Ansprüche,
**dadurch gekennzeichnet, dass**
die Druckausgabe der Originaldatei (02) über das mobile erste Endgerät (01) oder über die von dem mobilen ersten Endgerät (01) verschiedene erste oder zweite Datenverarbeitungseinrichtung erfolgt.

6. Verfahren nach einem der voranstehenden Ansprüche,
**dadurch gekennzeichnet, dass**
der Start der auf dem mobilen ersten Endgerät (01) installierten Anwendung durch Aufruf der korrespondierenden Datei (04) über eine Verknüpfung erfolgt.

7. Verfahren nach einem der voranstehenden Ansprüche,
**dadurch gekennzeichnet, dass**
der Aufruf der korrespondierenden Datei (04)
- aus einer Mail-Anwendung,
- aus einer Kalender-Anwendung oder
- aus einer Dateiverzeichnis-Anwendung
heraus erfolgt.

8. Verfahren nach einem der voranstehenden Ansprüche,
**dadurch gekennzeichnet, dass**
die Erzeugung der korrespondierenden Datei (04) eine Formatwandlung in ein auf dem mobilen ersten Endgerät (01) ausgebbares und/oder bearbeitbares Format umfasst.

9. Verfahren nach einem der voranstehenden Ansprüche,
**dadurch gekennzeichnet, dass**
die korrespondierende Datei (04) Daten umfasst, die eine im wesentlichen mit dem Original übereinstimmende Wiedergabe des Inhalts der Originaldatei (02) auf dem mobilen ersten Endgerät (01) ermöglichen.

10. Verfahren nach Anspruch 9,
**dadurch gekennzeichnet, dass**
die korrespondierende Datei (04) mit Daten, die eine im wesentlichen mit dem Original übereinstimmende Wiedergabe des Inhalts der Originaldatei (02) auf dem mobilen ersten Endgerät (01) ermöglichen, auf dem mobilen ersten Endgerät 01) modifiziert, anschließend an die von dem mobilen ersten Endgerät (01) verschiedene erste oder zweite Datenverarbeitungseinrichtung übertragen und dort die Originaldatei (02) entsprechend den auf dem mobilen ersten Endgerät (01) vorgenommenen Modifizierungen geändert wird.

11. Verfahren nach einem der voranstehenden Ansprüche,
**dadurch gekennzeichnet, dass**
Änderungen an der Originaldatei (02) oder der korrespondierenden Datei (04) über die Ermittlung bestimmter Werte festgestellt werden können.

12. Verfahren nach Anspruch 11,
**dadurch gekennzeichnet, dass**
es sich bei dem zu ermittelnden Wert um einen Hash-Wert, eine Seriennummer oder eine Zeitkennzeichnung handelt.

13. Verfahren nach einem der voranstehenden Ansprüche,
**dadurch gekennzeichnet, dass**
die korrespondierende Datei (04) eine geringere Dateigröße als die Originaldatei (02) und/oder ein auf das mobile erste Endgerät (01) optimiertes Format aufweist.

14. Anordnung mit mindestens einem Chip und/oder Prozessor, der (die) derart eingerichtet ist (sind), dass ein Verfahren zur Handhabung von Dateien mittels eines mobilen ersten Endgeräts (01) ausführbar ist, wobei eine Originaldatei (02) als Anhang einer E-Mail oder als Anhang einer mittels eines Nachrichtenübermittlungsdienstes übertragenen Nachricht von einem zweiten Endgerät an einen Server eines Providers eines E-Mail- oder Nachrichtenübermittlungsdienstes übermittelt wird, die Originaldatei (02) auf einer von dem mobilen ersten Endgerät (01) verschiedenen ersten Datenverarbeitungseinrichtung gespeichert wird, eine mit der Originaldatei (02) korrespondierende Datei (04) erzeugt wird, wobei die korrespondierende Datei (04) zumindest Angaben über den Speicherort der Originaldatei (02) umfasst,
die Originaldatei (02) durch die korrespondierende Datei (04) ersetzt und die korrespondierende Datei (04) anstelle der Originaldatei (02) als Anhang der E-Mail oder als Anhang der Nachricht an das mobile erste Endgerät (01) übertragen wird,
wobei weiter auf dem mobilen ersten Endgerät (01) eine Anwendung installiert ist, und bei Nutzereingaben über Eingabemittel des mobilen ersten Endgeräts (01) in die Anwendung durch die Anwendung die Nutzereingaben und wenigstens ein Teil der in der korrespondierenden Datei (04) enthaltenen Daten ausgewertet werden, und
die Anwendung Befehle zur Handhabung der Originaldatei (02) an die erste oder eine zweite von dem mobilen ersten Endgerät (01) verschiedene Datenverarbeitungseinrichtung sendet, die die erste oder zweite Datenverarbeitungseinrichtung veranlassen, eine Handhabung der Originaldatei (02) gemäß den Nutzereingaben auszuführen,
wobei die Handhabung erfolgt, indem ein Versenden der Originaldatei (02) als Fax und/oder ein Ausdruck der Originaldatei (02) gestartet wird.

15. Computerprogramm, umfassend clientseitige und serverseitige Programm-Module, welches es einer Datenverarbeitungseinrichtung im Zusammenspiel mit einem mobilen ersten Endgerät (01) ermöglicht, nachdem das (die) clientseitige(n) Programm-Modul(e) in den Speicher des mobilen ersten Endgerätes (01) und das (die) serverseitige(n) Programm-Modul(e) in den Speicher der Datenverarbeitungseinrichtung geladen worden ist (sind), ein Verfahren zur Handhabung von Dateien mittels des mobilen ersten Endgeräts (01) auszuführen, wobei eine Originaldatei (02) als Anhang einer E-Mail oder als Anhang einer mittels eines Nachrichtenübermittlungsdienstes übertragenen Nachricht von einem zweiten Endgerät an einen Server eines Providers eines E-Mail- oder Nachrichtenübermittlungsdienstes übermittelt wird, die Originaldatei (02) auf einer von dem mobilen ersten Endgerät (01) verschiedenen ersten Datenverarbeitungseinrichtung gespeichert wird, eine mit der Originaldatei (02) korrespondierende Datei (04) erzeugt wird, wobei die korrespondierende Datei (04) zumindest Angaben über den Speicherort der Originaldatei (02) umfasst,
die Originaldatei (02) durch die korrespondierende Datei (04) ersetzt und die korrespondierende Datei (04) anstelle der Originaldatei (02) als Anhang der E-Mail oder als Anhang der Nachricht an das mobile erste Endgerät (01) übertragen wird,
wobei weiter auf dem mobilen ersten Endgerät (01) eine Anwendung installiert ist, und bei Nutzereingaben über Eingabemittel des mobilen ersten Endgeräts (01) in die Anwendung durch die Anwendung die Nutzereingaben und wenigstens ein Teil der in der korrespondierenden Datei (04) enthaltenen Daten ausgewertet werden, und
die Anwendung Befehle zur Handhabung der Originaldatei (02) an die erste oder eine zweite von dem mobilen ersten Endgerät (01) verschiedene Datenverarbeitungseinrichtung sendet, die die erste oder zweite Datenverarbeitungseinrichtung veranlassen, eine Handhabung der Originaldatei (02) gemäß den Nutzereingaben auszuführen,
wobei die Handhabung erfolgt, indem ein Versenden der Originaldatei (02) als Fax und/oder ein Ausdruck der Originaldatei (02) gestartet wird.

16. Computerlesbares Speichermedium, auf dem ein Computerprogramm gespeichert ist, wobei das Computerprogramm clientseitige und serverseitige Programm-Module umfasst, und das Computerprogramm es einer Datenverarbeitungseinrichtung im Zusammenspiel mit einem mobilen ersten Endgerät (01) ermöglicht, nachdem das (die) clientseitige(n) Programm-Modul(e) in den Speicher des mobilen ersten Endgerätes (01) und das (die) serverseitige(n) Programm-Modul(e) in den Speicher der Datenverarbeitungseinrichtung geladen worden ist (sind), ein Verfahren zur Handhabung von Dateien mittels des mobilen ersten Endgeräts (01) auszuführen, wobei eine Originaldatei (02) als Anhang einer E-Mail oder als Anhang einer mittels eines Nachrichtenübermittlungsdienstes übertragenen Nachricht von einem zweiten Endgerät an einen Server eines Providers eines E-Mail- oder Nachrichtenübermittlungsdienstes übermittelt wird, die Originaldatei (02) auf einer von dem mobilen ersten Endgerät (01) verschiedenen ersten Datenverarbeitungseinrichtung gespeichert wird,
eine mit der Originaldatei (02) korrespondierende Datei (04) erzeugt wird, wobei die korrespondierende Datei (04) zumindest Angaben über den Speicherort der Originaldatei (02) umfasst,
die Originaldatei (02) durch die korrespondierende Datei (04) ersetzt und die korrespondierende Datei (04) anstelle der Originaldatei (02) als Anhang der E-Mail oder als Anhang der Nachricht an das mobile erste Endgerät (01) übertragen wird,
wobei weiter auf dem mobilen ersten Endgerät (01) eine Anwendung installiert ist, und bei Nutzereingaben über Eingabemittel des mobilen ersten Endgeräts (01) in die Anwendung durch die Anwendung die Nutzereingaben und wenigstens ein Teil der in der korrespondierenden Datei (04) enthaltenen Daten ausgewertet werden, und
die Anwendung Befehle zur Handhabung der Originaldatei (02) an die erste oder eine zweite von dem mobilen ersten Endgerät (01) verschiedene Datenverarbeitungseinrichtung sendet, die die erste oder zweite Datenverarbeitungseinrichtung veranlassen, eine Handhabung der Originaldatei (02) gemäß den Nutzereingaben auszuführen,
wobei die Handhabung erfolgt, indem ein Versenden der Originaldatei (02) als Fax und/oder ein Ausdruck der Originaldatei (02) gestartet wird.

## Claims

1. Method of handling files with a mobile first terminal, where
an original file (02) is transmitted as an attachment of an e-mail or as an attachment of a message, which is transmitted by means of a telecommunication service from a second terminal to a server of a provider of an e-mail or telecommunication service,
the original file (02) is stored on a first data processing device different from the mobile first terminal (01),
a file (04) corresponding to the original file (02) is generated, wherein the corresponding file (04) includes at least information about the storage location of the original file (02),
the original file (02) is replaced by the corresponding file (04) and the corresponding file (04) is transmitted as attachment of the e-mail or of the message to the mobile first terminal (01) instead of the original file (02),
wherein further on the mobile first terminal (01) an application is installed, and by user input via input means of the mobile first terminal (01) in the application the user input and at least a part of the data, which is included in the corresponding file (04), are evaluated by the application, and
the application sends to the first or to a second data processing device which is different from the mobile first terminal (01) instructions for handling the original file (02), where the instructions prompt the first or second data processing device to execute handling of the original file (02) according to the user input,
whereby the handling is performed by starting sending the original file (02) as a facsimile and/or printout of the original file (02).

2. Method according to claim 1,
**characterized in that**
the telecommunication service is implemented as
- a Short Message Service (SMS),
- an Enhanced Messaging System (EMS), or
- a Multimedia Messaging Service (MMS).

3. Method according to claim 1 or 2,
**characterized in that**
original files (02) are transmitted from the server of a provider of an e-mail or telecommunication service to the first data processing device which is different from the mobile first terminal (01).

4. Method according to one of the preceding claims,
**characterized in that**
the first data processing device which is different from the mobile first terminal (01) functions with respect to the mobile first terminal (01) as a server of a provider of an e-mail or telecommunication service, wherein a computer program is installed on the first data processing device which is different from the mobile first terminal (01), wherein the computer program queries the server of a provider of the e-mail or telecommunication service for e-mails or messages resident on the server, accepts the existing e-mails or messages, replaces if applicable the original files (02) with corresponding files (04), and makes the corresponding files (04) available on the mobile first terminal (01).

5. Method according to one of the preceding claims,
**characterized in that**
the print output of the original file (02) is performed via the mobile first terminal (01) or via the first or second data processing device which is different from the mobile first terminal (01).

6. Method according to one of the preceding claims,
**characterized in that**
the application installed on the mobile first terminal (01) is started by calling the corresponding file (04) via a link.

7. Method according to one of the preceding claims,
**characterized in that**
the corresponding file (04) is called from
- a mail application,
- a calendar application, or
- a file directory application.

8. Method according to one of the preceding claims,
**characterized in that**
generation of the corresponding file (04) includes a format conversion to a format that can be outputted and/or processed on the mobile first terminal (01).

9. Method according to one of the preceding claims,
**characterized in that**
the corresponding file (04) includes data capable of reproducing the content of the original file (02) on the mobile first terminal (01) so as to be essentially identical to the original.

10. Method according to one of the preceding claims,
**characterized in that**
the corresponding file (04) with the data capable of reproducing the content of the original file (02) on the mobile first terminal (01) to be essentially identical to the original, is modified on the mobile first terminal (01), is subsequently transmitted to the first or second data processing device which is different from the mobile first terminal (01), where the original file (02) is changed in accordance with the modifications carried out on the mobile first terminal (01).

11. Method according to one of the preceding claims,
**characterized in that**
changes in the original file (02) or in the corresponding file (04) can be determined by determining particular values.

12. Method according to claim 11,
**characterized in that**
the value to be determined comprises a hash value, a serial number, or a time stamp.

13. Method according to one of the preceding claims,
**characterized in that**
the corresponding file (04) has a smaller file size than the original file (02) and/or has a format optimized for the mobile first terminal (01).

14. Arrangement with at least a chip and/or processor configured to execute a method for handling files with a mobile first terminal (01), wherein an original file (02) is transmitted as an attachment of an e-mail or as an attachment of a message, which is transmitted by means of a telecommunication service from a second terminal to a server of a provider of an e-mail or telecommunication service,
the original file (02) is stored on a first data processing device different from the mobile first terminal (01),
a file (04) corresponding to the original file (02) is generated, wherein the corresponding file (04) includes at least information about the storage location of the original file (02),
the original file (02) is replaced by the corresponding file (04) and the corresponding file (04) is transmitted as attachment of the e-mail or of the message to the mobile first terminal (01) instead of the original file (02),
wherein further on the mobile first terminal (01) an application is installed, and by user input via input means of the mobile first terminal (01) in the application the user input and at least a part of the data, which is included in the corresponding file (04), are evaluated by the application, and
the application sends to the first or to a second data processing device which is different from the mobile first terminal (01) instructions for handling the original file (02), where the instructions prompt the first or second data processing device to execute handling of the original file (02) according to the user input,
whereby the handling is performed by starting sending the original file (02) as a facsimile and/or printout of the original file (02).

15. Computer program, comprising client-side and server-side program modules, which after the client-side program module(s) is/are loaded into memory of a mobile first terminal (01) and the server-side program module(s) is/are loaded into the memory of the data processing device, enables the data processing device in cooperation with the mobile first terminal (01) to execute a method for handling data with the mobile first terminal (01), wherein an original file (02) is transmitted as an attachment of an e-mail or as an attachment of a message, which is transmitted by means of a telecommunication service from a second terminal to a server of a provider of an e-mail or telecommunication service,
the original file (02) is stored on a first data processing device different from the mobile first terminal (01),
a file (04) corresponding to the original file (02) is generated, wherein the corresponding file (04) includes at least information about the storage location of the original file (02),
the original file (02) is replaced by the corresponding file (04) and the corresponding file (04) is transmitted as attachment of the e-mail or of the message to the mobile first terminal (01) instead of the original file (02),
wherein further on the mobile first terminal (01) an application is installed, and by user input via input means of the mobile first terminal (01) in the application the user input and at least a part of the data, which is included in the corresponding file (04), are evaluated by the application, and
the application sends to the first or to a second data processing device which is different from the mobile first terminal (01) instructions for handling the original file (02), where the instructions prompt the first or second data processing device to execute handling of the original file (02) according to the user input, whereby the handling is performed by starting sending the original file (02) as a facsimile and/or printout of the original file (02).

16. Computer-readable storage medium storing a computer program, wherein the computer program comprises client-side and server-side program modules and the computer program enables a data processing device in cooperation with a mobile first terminal (01), after the client-side program module(s) is/are loaded into memory of the mobile first terminal (01) and the server-side program module(s) is/are loaded into the memory of the data processing device, to execute a method for handling data with the mobile first terminal (01), wherein an original file (02) is transmitted as an attachment of an e-mail or as an attachment of a message, which is transmitted by means of a telecommunication service from a second terminal to a server of a provider of an e-mail or telecommunication service,
the original file (02) is stored on a first data processing device different from the mobile first terminal (01),
a file (04) corresponding to the original file (02) is generated, wherein the corresponding file (04) includes at least information about the storage location of the original file (02),
the original file (02) is replaced by the corresponding file (04) and the corresponding file (04) is transmitted as attachment of the e-mail or of the message to the mobile first terminal (01) instead of the original file (02),
wherein further on the mobile first terminal (01) an application is installed, and by user input via input means of the mobile first terminal (01) in the application the user input and at least a part of the data, which is included in the corresponding file (04), are evaluated by the application, and
the application sends to the first or to a second data processing device which is different from the mobile first terminal (01) instructions for handling the original file (02), where the instructions prompt the first or second data processing device to execute handling of the original file (02) according to the user input,
whereby the handling is performed by starting sending the original file (02) as a facsimile and/or printout of the original file (02).

## Revendications

1. Procédé pour la gestion de fichiers au moyen d'un premier terminal mobile,
un fichier original (02) étant transmis en annexe d'un mail ou en annexe d'un message transmis au moyen d'un service de transmission de messages d'un second terminal à un serveur d'un fournisseur d'accès d'un service de transmission de mails ou de messages,
le fichier original (02) étant sauvegardé sur un premier dispositif de traitement de données différent du premier terminal (01) mobile,
un fichier (04) correspondant au fichier original (02) étant généré, le fichier (04) correspondant comprenant au moins des indications sur l'emplacement de stockage du fichier original (02),
le fichier original (02) étant remplacé par le fichier (04) correspondant et le fichier (04) correspondant étant transmis au lieu du fichier original (02) en annexe du mail ou en annexe du message au premier terminal (01) mobile,
une application étant également installée sur le premier terminal (01) mobile, et les entrées d'utilisateur et au moins une partie des données incluses dans le fichier (04) correspondant étant analysées en cas d'entrées d'utilisateur par des moyens d'entrée du premier terminal (01) mobile dans l'application par l'application, et
l'application envoyant des instructions pour la gestion du fichier original (02) au premier ou à un second dispositif de traitement de données différent du premier terminal (01) mobile, lequel dispositif ordonnant au premier ou au second dispositif de traitement de données d'exécuter une gestion du fichier original (02) selon les entrées d'utilisateur, la gestion s'effectuant en démarrant un envoi du fichier original (02) sous forme de fax et/ou une sortie imprimée du fichier original (02).

2. Procédé selon la revendication 1,
**caractérisé en ce que**,
en ce qui concerne le service de transmission de messages, il s'agit d'un
- d'un "Short Message Service" (SMS),
- d'un "Enchanced Messaging System" (EMS) ou
- d'un "Multimedia Messaging Service" (MMS).

3. Procédé selon la revendication 1 ou 2,
**caractérisé en ce que**
des fichiers originaux (02) sont transmis par le serveur d'un fournisseur d'accès d'un service de transmission de mails ou de messages au premier dispositif de traitement de données différent du premier terminal (01) mobile.

4. Procédé selon l'une des revendications précédentes,
**caractérisé en ce que**
le premier dispositif de traitement de données, différent du premier terminal (01) mobile, fait office par rapport au premier terminal (01) mobile de serveur d'un fournisseur d'accès d'un service de transmission de mail ou de messages du fait qu'un logiciel est installé sur le premier dispositif de traitement de données différent du premier terminal (01) mobile, lequel logiciel interroge le serveur d'un fournisseur d'accès du service de transmission de mail ou du service de transmission de messages pour des mails ou des messages présents à cet endroit, prend en charge des mails ou des messages présents à cet endroit, remplace éventuellement les fichiers originaux (02) joints comme en annexe de mails ou de messages par des fichiers (04) correspondants et les met à disposition sur le premier terminal (01) mobile.

5. Procédé selon l'une des revendications précédentes,
**caractérisé en ce que**
la sortie imprimée du fichier original (02) s'effectue par le premier terminal (01) mobile ou par le premier ou le second dispositif de traitement de données différent du premier terminal (01) mobile.

6. Procédé selon l'une des revendications précédentes,
**caractérisé en ce que**
le démarrage de l'application installée sur le premier terminal (01) mobile s'effectue par appel du fichier (04) correspondant au moyen d'un enchaînement.

7. Procédé selon l'une des revendications précédentes,
**caractérisé en ce que**
l'appel du fichier (04) correspondant s'effectue
- à partir d'une application de mail,
- à partir d'une application de calendrier ou
- à partir d'une application de répertoire de fichier.

8. Procédé selon l'une des revendications précédentes,
**caractérisé en ce que**
la génération du fichier (04) correspondant comprend une conversion de format dans un format pouvant être édité et/ou traité sur le premier terminal (01) mobile.

9. Procédé selon l'une des revendications précédentes,
**caractérisé en ce que**
le fichier (04) correspondant comprend des données qui permettent une restitution, coïncidant pour l'essentiel avec l'original, du contenu du fichier original (02) sur le premier terminal (01) mobile.

10. Procédé selon la revendication 9,
**caractérisé en ce que**
le fichier (04) correspondant est modifié sur le premier terminal (01) mobile avec des données qui permettent une restitution, coïncidant essentiellement à l'original, du contenu du fichier original (02) sur le premier terminal (01) mobile sont modifiées sur le premier terminal (01) mobile, est transmis ensuite au premier ou au second dispositif de traitement de données différent du premier terminal (01) mobile et le fichier original (02) est modifié à cet endroit en fonction des modifications effectuées sur le premier terminal (01) mobile.

11. Procédé selon l'une des revendications précédentes,
**caractérisé en ce que**
des modifications au fichier original (02) ou le fichier (04) correspondant peuvent être constatées par la détermination de valeurs définies.

12. Procédé selon la revendication 11,
**caractérisé en ce que**, en ce qui concerne la valeur à déterminer, il s'agit d'une valeur de hachage, d'un numéro de série ou d'un marquage de temps.

13. Procédé selon l'une des revendications précédentes,
**caractérisé en ce que**
le fichier (04) correspondant présente une grandeur de fichier plus faible que le fichier original (02) et/ou un format optimisé pour le premier terminal (01) mobile.

14. Agencement comprenant au moins une puce et/ou un processeur, laquelle/lesquels est/sont équipé(s) de telle sorte qu'un procédé de gestion de fichiers peut être mis en oeuvre au moyen d'un premier terminal (01) mobile, un fichier original (02) étant transmis sous forme d'annexe d'un mail ou sous forme d'annexe d'un message transmis au moyen d'un service de transmission de messages d'un second terminal à un serveur d'un fournisseur d'accès d'un service de transmission de mails ou de transmission de messages, le fichier original (02) étant sauvegardé sur un premier dispositif de traitement de données différent du premier terminal (01) mobile, un fichier (04) correspondant au fichier orignal (02) étant généré, le fichier (04) correspondant comprenant au moins des indications sur l'emplacement de stockage du fichier original (02),
le fichier original (02) étant remplacé par le fichier (04) correspondant et le fichier (04) correspondant étant transmis, au lieu du fichier original (02), au premier terminal (01) mobile comme annexe du mail ou comme annexe du message,
une application étant installée également sur le premier terminal (01) mobile, et, en cas d'entrées d'utilisateur par des moyens d'entrée du premier terminal (01) mobile dans l'application par l'application, les entrées d'utilisateurs et au moins une partie des données incluses dans le fichier (04) correspondant étant analysées, et
l'application envoyant des instructions pour la gestion du fichier original (02) au premier ou à un second dispositif de traitement de données différent du premier terminal (01) mobile, lequel dispositif ordonne au premier ou au second dispositif de traitement de données d'exécuter une gestion du fichier original (02) selon les entrées d'utilisateurs,
la gestion s'effectuant en démarrant un envoi du fichier original (02) sous forme de fax et/ou une sortie imprimée du fichier original (02).

15. Logiciel, comprenant des modules de programme côté client et côté serveur, qui permet à un dispositif de traitement de données, en coopération avec un premier terminal (01) mobile, une fois que le ou les module(s) de programme côté client a ou ont été chargé(s) dans la mémoire du premier terminal (01) mobile et une fois que le ou les module(s) de programme côté serveur a ou ont été chargé(s) dans la mémoire du dispositif de traitement de données, de mettre en oeuvre un procédé de gestion de fichiers au moyen d'un premier terminal (01) mobile, un fichier original (02) étant transmis, en annexe d'un mail ou en annexe d'un message transmis au moyen d'un service de transmission de messages, d'un second terminal à un serveur d'un fournisseur d'accès d'un service de transmission de mails ou de messages, le fichier original (02) étant stocké sur un premier dispositif de traitement de données différent du premier terminal (01) mobile, un fichier (04) correspondant au fichier original (02) étant généré, le fichier (04) correspondant comprenant au moins des indications sur le lieu de stockage du fichier original (02), le fichier original (02) étant remplacé par le fichier (04) correspondant et le fichier (04) correspondant étant transmis à la place du fichier orignal (02) en annexe du mail ou en annexe du message au premier terminal (01) mobile,
une application étant installée également sur le premier terminal (01) mobile, et, dans le cas d'entrées d'utilisateurs par des moyens d'entrée du premier terminal (01) mobile dans l'application par l'application, les entrées d'utilisateur et au moins une partie des données contenues dans le fichier (04) correspondant étant analysées, et
l'application envoyant des instructions concernant la gestion du fichier original (02) au premier ou à un second dispositif de traitement de données différent du premier terminal (01) mobile, lequel dispositif ordonne au premier ou au second dispositif de traitement de données d'exécuter une gestion du fichier original (02) selon les entrées d'utilisateurs,
la gestion s'effectuant en démarrant un envoi du fichier orignal (02) sous forme de fax et/ou une sortie imprimée du fichier original (02).

16. Support de stockage lisible par ordinateur, sur lequel est stocké un logiciel, le logiciel comprenant des logiciels côté client et côté serveur, et le logiciel permettant à un dispositif de traitement de données, en coopération avec un premier terminal (01) mobile, une fois que le/les logiciel(s) côté client a ou ont été chargé(s) dans la mémoire du premier terminal (01) mobile et que le/les logiciel(s) côté serveur a ou ont été chargé(s) dans la mémoire du dispositif de traitement de données, de mettre en oeuvre un procédé pour la gestion de fichiers au moyen d'un premier terminal (01) mobile, un fichier original (02) étant transmis en annexe d'un mail ou en annexe d'un message transmis au moyen d'un service de transmission de messages d'un second terminal à un serveur d'un fournisseur d'accès d'un service de transmission de mails ou de messages, le fichier orignal (02) étant stocké sur un premier dispositif de traitement de données différent du premier terminal (01) mobile, un fichier (04) correspondant au fichier original (02) étant généré, le fichier (04) correspondant contenant au moins des indications sur l'emplacement de stockage du fichier original (02),
le fichier original (02) étant remplacé par le fichier (04) correspondant et le fichier (04) correspondant étant transmis à la place du fichier original (02) comme annexe du mail ou comme annexe du message au premier terminal (01) mobile,
une application étant installée également sur le premier terminal (01) mobile, et, en cas d'entrées d'utilisateurs par des moyens d'entrée du premier terminal (01) mobile dans l'application par l'application, les entrées d'utilisateur et au moins une partie des données incluses dans le fichier (04) correspondant étant analysées, et
l'application envoyant des instructions pour la gestion du fichier original (02) au premier ou à un second dispositif de traitement de données différent du premier terminal (01) mobile, lesquelles instructions donnent l'ordre au premier ou au second dispositif de traitement de données d'exécuter une gestion du fichier original (02) selon les entrées d'utilisateurs,
la gestion s'effectuant en démarrant un envoi du fichier orignal (02) sous forme de fax et/ou une sortie imprimée du fichier original (02).
